(19) Europäisches Patentamt
European Patent Office
Office européen des brevets

(11) **EP 4 408 915 B1**

(12) **EUROPÄISCHE PATENTSCHRIFT**

(45) Veröffentlichungstag und Bekanntmachung des Hinweises auf die Patenterteilung:
**25.03.2026 Patentblatt 2026/13**

(21) Anmeldenummer: **22761396.5**

(22) Anmeldetag: **12.08.2022**

(51) Internationale Patentklassifikation (IPC):
**C08K 3/04** (2006.01) **C08K 5/098** (2006.01)
**C08K 5/3477** (2006.01) **C08K 5/3492** (2006.01)
**B60C 9/00** (2006.01)

(52) Gemeinsame Patentklassifikation (CPC):
(C-Sets verfügbar)
**B60C 9/0007; B60C 1/00; C08K 3/04; C08K 5/098; C08K 5/3477; C08K 5/34922;** B60C 2009/0021
(Forts.)

(86) Internationale Anmeldenummer:
**PCT/DE2022/200181**

(87) Internationale Veröffentlichungsnummer:
**WO 2023/051878 (06.04.2023 Gazette 2023/14)**

(54) **ELASTOMERPRODUKT**

ELASTOMER PRODUCT

PRODUIT ÉLASTOMÈRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.09.2021 DE 102021210783**

(43) Veröffentlichungstag der Anmeldung:
**07.08.2024 Patentblatt 2024/32**

(73) Patentinhaber: **Continental Reifen Deutschland GmbH**
**30175 Hannover (DE)**

(72) Erfinder:
• **MOURA, Tiago**
**30175 Hannover (DE)**

• **KRAMER, Thomas**
**30175 Hannover (DE)**
• **SCHUNACK, Michael**
**30175 Hannover (DE)**

(74) Vertreter: **Continental Corporation**
**c/o Continental Reifen Deutschland GmbH**
**Intellectual Property Tires**
**Continental-Plaza 1**
**30175 Hannover (DE)**

(56) Entgegenhaltungen:
**EP-A1- 3 073 002    EP-A1- 3 854 609**
**EP-A2- 1 745 945**

**(Forts. nächste Seite)**

(52) Gemeinsame Patentklassifikation (CPC): (Forts.)

    C-Sets
    **C08K 3/04, C08L 7/00;**
    **C08K 5/098, C08L 7/00;**
    **C08K 5/3477, C08L 7/00;**
    **C08K 5/34922, C08L 7/00**

**Beschreibung**

Die Erfindung betrifft ein Elastomerprodukt, welches wenigstens eine in eine vulkanisierbare Kautschukmasse eingebettete Festigkeitsträgerlage aufweist, wobei die Festigkeitsträgerlage von einer Vielzahl von Korden aus Stahl gebildet ist, die jeweils aus mindestens zwei helixförmig verdrehten Filamente oder mindestens zwei aus mehreren helixförmig miteinander verdrehten Filamenten gebildeten Strängen bestehen.

Derartige Elastomerprodukte sind bekannt und dienen beispielsweise zur Herstellung von Endlosriemen, Gummiraupen oder Förderbändern sowie zur Ausbildung von Bauteilen bzw. Komponenten im Reifenbau, insbesondere für Fahrzeugluftreifen. Beispielsweise werden derartige Elastomerprodukte in Fahrzeugluftreifen für Personenkraftwagen sowie leichte Lastkraftwagen im Bereich der Karkasse und des Gürtels eingesetzt. Üblicherweise werden die Korde aus Stahldrähten hergestellt, die jedoch aufgrund ihrer nur geringen Längselastizität beispielsweise bei sogenannten 0°-Stahlgürteln nachteilig sind. Solche 0°-Spulbandagen werden bei Hochleistungsreifen für Pkw und Motorräder eingesetzt und umfassen Korde, die genau in Laufrichtung des Reifens orientiert sind. In derartigen Fällen kommen von daher häufig textile Materialien wie PA 6.6 oder Hybridkorde zum Beispiel aus PA 6.6 und Aramidfasern zum Einsatz. Nachteilig bei derartigen nicht aus Stahl bestehenden Korden sind ihr geringer E-Modul sowie die hohen Kosten im Falle der Verwendung von Aramidfasern. Ferner beeinträchtigt die Verwendung textiler Materialien als Kord die Rollwiderstandseigenschaften eines damit ausgerüsteten Fahrzeugluftreifens aufgrund der innewohnenden Hysterese und kann unter ungünstigen Bedingungen auch das Auftreten von Standplatten begünstigen. Überdies können im Fahrzeugluftreifen bei Einsatz textiler Korde unerwünschte Spannungen/Deformationen auftreten, die Abweichungen von der gewünschten Reifenform begünstigen. Ferner ist die Hochgeschwindigkeitsperformance derartiger Fahrzeugluftreifen verbesserungswürdig.

Aufgabe der Erfindung ist es, ein Elastomerprodukt der eingangs genannten Art dahingehend zu verbessern, dass die Nachteile des Standes der Technik überwunden werden.

Die Lösung der gestellten Aufgabe wird durch Ausgestaltung eines Elastomerproduktes gemäß den Merkmalen des Patentanspruchs 1 angegeben.

Vorteilhafte Ausgestaltungen und Weiterbildungen der Erfindung sind Gegenstand der abhängigen Ansprüche.

Der erfindungsgemäße Vorschlag sieht vor, Korde aus Stahl vorzusehen, die jeweils ausschließlich aus mindestens zwei helixförmig verdrehten Filamenten oder mindestens zwei aus mehreren helixförmig miteinander verdrehten Filamenten gebildeten Strängen bestehen, wobei zwischen benachbarten Filamenten freie Zwischenräume erhalten werden, die nach der Vulkanisation der Kautschukmasse von der Kautschukmasse aufgefüllt sind, wobei die Korde eine Bruchdehnung von mindestens 5 % und eine Dehnung unter einer Zugbelastung von 100 N von mindestens 3,5 % aufweisen und die vulkanisierbare Kautschukmasse neben Natur- und/oder Synthesekautschuk als weitere Bestandteile Schwefel und/oder Schwefelspender sowie Beschleuniger enthält und die Dehnung der Korde nach vollständiger Vulkanisation der Kautschukmasse unter einer Zugbelastung von 100 N um mindestens 10 % gegenüber dem Zustand vor der Vulkanisation verringert ist.

Mit anderen Worten schlägt die Erfindung die Auswahl spezifischer Stahl-Korde vor, die durch eine Kraft-Dehnungskurve charakterisiert sind, bei der sich eine Bruchdehnung von mindestens 5 % und eine Dehnung bei einer geringen Belastung von 100 N von mindestens 3,5 % zeigt. Damit erreicht das erfindungsgemäße Elastomerprodukt vor der Vulkanisation der vulkanisierbaren Kautschukmasse eine hohe Elastizität auch unter geringer Zuglast, die beispielsweise in einem Reifenbauprozess von Vorteil ist, besonders wenn der das erfindungsgemäße Elastomerprodukt enthaltende Reifenrohling auf einer Reifenbaumaschine aufgeweitet wird.

Dies ist auf die verdrehte bzw. verdrillte Konfiguration der einzelnen Filamente in den Korden zurückzuführen, da auf diese Weise zwischen benachbarten Filamenten freie Zwischenräume erhalten werden, die bei geringer anliegender Zugbelastung eine leichte Dehnfähigkeit erlauben, indem der Kord unter Längenzunahme eingeschnürt wird.

Andererseits wird aber durch die erfindungsgemäß angepasste Rezeptur der im erfindungsgemäßen Elastomerprodukt verwendeten vulkanisierbaren Kautschukmasse sichergestellt, dass diese während und nach der Vulkanisation die vorhandenen Zwischenräume zwischen den einzelnen Filamenten der Korde und benachbarten Korden der Festigkeitsträgerlage vollständig auffüllt und eine besonders hohe Haftung zu diesen eingeht, sodass die ursprünglich vorhandene hohe Dehnfähigkeit von mindestens 3,5 % unter einer Zugbelastung von 100 N nach der vollständigen Vulkanisation der Kautschukmasse signifikant um mindestens 10 %, vorzugsweise deutlich mehr verringert wird und im Idealzustand nahezu vollständig eliminiert wird. Auf diese Weise zeigt das erfindungsgemäße Elastomerprodukt im Endzustand, d. h. nach der vollständigen Vulkanisation der Kautschukmasse eine deutlich verringerte Materialhysterese, die sich beispielsweise bei Einsatz des Elastomerprodukts in einem Fahrzeugluftreifen in einer signifikant verbesserten Rollwiderstands-Performance und besserem Hochgeschwindigkeitsverhalten äußert. Ferner wird auch das Auftreten von Standplatten oder von Abweichungen der Reifenform wirksam verhindert. Überdies lässt sich die Festigkeitsträgerlage des erfindungsgemäßen Elastomerprodukts gegenüber dem Einsatz von textilen Materialien zu deutlich geringeren Kosten herstellen.

Nach einem Vorschlag der Erfindung werden Stahl-Korde für das erfindungsgemäße Elastomerprodukt eingesetzt, die eine Anzahl von n Filamenten mit einer jeweiligen Querschnittsfläche A, gemessen in mm$^2$ umfassen, wobei ein einzelner Kord aus einem Stahlwerkstoff mit dem E-Modul E gebildet ist und unter einer Zugbelastung von 0,5 N pro enthaltenem Filament in dem Kord eine helixförmig verlaufende Mittellinie und eine Steigungslänge $L_0$ aufweist und einen Wert P in N gemäß der Gleichung (1) von mindestens 50 N aufweist:

$$P = \pi n E \left(\frac{A}{S}\right)^2 \qquad \text{Gleichung (1),}$$

wobei S die Länge der Mittellinie eines aus dem Kord vereinzelten Filaments über einen vollständigen Steigungsumlauf, gemessen in mm, ist. Die Anzahl derartiger Steigungsumläufe pro 1 Meter wird üblicherweise in t/m (Touren/Meter) angegeben.

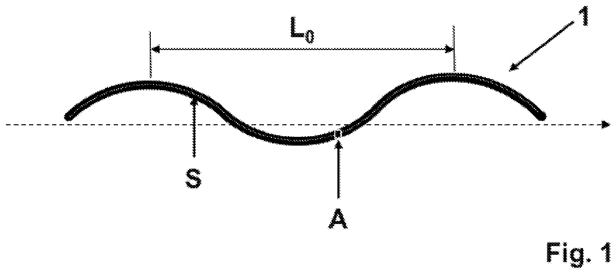

Die vorgenannten Abmessungen werden anhand der in Figur 1 wiedergegebenen zeichnerischen Darstellung eines Filaments 1 ersichtlich, welches aus einem erfindungsgemäßen Kord vereinzelt worden ist.

Man erkennt den helixförmigen Verlauf mit einer konstanten Steigung, die in einer Steigungslänge $L_0$ resultiert. Die Steigungslänge $L_0$ repräsentiert den axialen Abstand zwischen zwei übereinstimmenden Raumpositionen des Querschnittes des Filaments 1.

Ferner ist auch die Länge S der Mittellinie des Filaments 1 über den vollständigen Steigungsumlauf entlang der Steigungslänge $L_0$ sowie die konstante Querschnittsfläche A des Filaments ersichtlich.

Die Länge S kann beispielsweise durch eine Axialscanvorrichtung ermittelt werden, wie sie in der WO 95/16816 A1 beschrieben ist.

Derartige Stahlkorde sind aus Stahl mit einem E-Modul von etwa 200.000 N/mm$^2$ gebildet. Der Wert P stellt damit ein Maß für die Zugsteifigkeit der Korde bei geringer Dehnung dar. Erfindungsgemäß besonders geeignete Werte für P liegen zwischen 50 N und 250 N.

Beispiele geeigneter Stähle zur Ausbildung der Korde umfassen Kohlenstoffstähle mit geringem Kohlenstoffgehalt zwischen 0,04 und 0,20 Gewichtsprozent, Edelstahl sowie Kohlenstoffstähle mit hohem Kohlenstoffgehalt von mindestens 0,65 Gewichtsprozent.

Nach einem weiteren Vorschlag der Erfindung weisen die Filamente einen äquivalenten Durchmesser d, definiert durch die Gleichung (2), auf, wobei das Verhältnis S:d kleiner als 30 ist:

$$A = \frac{\pi d^2}{4} \qquad (2).$$

Nach einem weiteren Vorschlag der Erfindung beträgt das Verhältnis $L_0$:S weniger als 0,95.

Im Rahmen der Erfindung wird es als sinnvoll angesehen, wenn ein einzelner Kord, sofern er aus Strängen miteinander helixförmig verdrehter Filamente gebildet wird, vorzugsweise zwei, drei oder vier derartige Stränge umfasst.

Die Anzahl der Filamente in einem einzelnen Strang beträgt bevorzugt eins, zwei oder drei derartige Filamente.

Die Gesamtanzahl n der in einem Kord vorhandenen Filamente beträgt bevorzugt zwischen zwei und acht derartiger Filamente, die gleich oder verschieden voneinander ausgebildet sein können.

Nach einem weiteren Vorschlag der Erfindung umfasst die vulkanisierbare Kautschukmasse Schwefel und/oder Schwefelspender insbesondere in einer Menge von 2 bis 8 phr, vorzugsweise etwa 4 bis 6 phr.

Die vorangehenden und auch nachfolgenden Rezepturangaben unter Einsatz der Einheit phr (parts per hundred parts of rubber weight) beziehen sich stets auf 100 Gewichtsteile Natur- und/oder Synthesekautschuk in der Kautschukmasse.

Die Vulkanisation wird insoweit in Anwesenheit von Schwefel und/oder Schwefelspendern durchgeführt, wobei einige Schwefelspender zugleich als Vulkanisationsbeschleuniger wirken können. Schwefel oder Schwefelspender werden im letzten Mischungsschritt in den vom Fachmann gebräuchlichen Mengen der Kautschukmasse zugesetzt. Vorzugsweise wird Schwefel in ölverstreckter Form verwendet. Auf diese Weise kann der Schwefel einfacher und gleichmäßiger eingearbeitet und dispergiert werden.

Des Weiteren kann die Kautschukmasse neben den Sulfenimidbeschleunigern und den Sulfenamidbeschleunigern, die auf Dibenzylamin basieren, weitere vulkanisationsbeeinflussende Substanzen wie weitere Vulkanisationsbeschleuniger, Vulkanisationsverzögerer und Vulkanisationsaktivatoren in üblichen Mengen enthalten. Vorzugsweise enthält die Kautschukmasse neben den Sulfenimidbeschleunigern und den Sulfenamidbeschleunigern, die auf Dibenzylamin basieren, weniger als 0,5 phr andere Vulkanisationsbeschleuniger.

Nach einem weiteren Vorschlag der Erfindung enthält die Kautschukmasse Beschleuniger in einer Menge von 0,5 bis 3 phr, vorzugsweise 0,8 bis 1,5 phr, wobei es sich vorzugsweise um einen Sulfenimidbeschleuniger und/oder zumindest einen Sulfenamidbeschleuniger, der auf Dibenzylamin basiert, handelt.

Insbesondere kann der Beschleuniger aus der N-Cyclohexyl-2-benzothiazolsulfenamid (CBS), N,N-Dicyclohexylenbenzothiazol-2-sulfenamid (DCBS), Benzothiazyl-2-sulfenmorpholid (MBS) undN-tert.Butyl-2-benzothiazylsulfenamid (TBBS) umfassenden Gruppe ausgewählt werden.

In bevorzugten Ausführungsformen der Erfindung enthält die Kautschukmasse DCBS als Beschleuniger. Dieser erweist sich aufgrund der vergleichsweise langsamen Reaktionskinetik besonders vorteilhaft für die Haftung der Korde in der Kautschukmasse.

Bei Sulfenimidbeschleunigern handelt es sich um Vulkanisationsbeschleuniger, die auf primären Aminen basieren. Im Gegensatz dazu basieren Sulfenamidbeschleuniger wie DCBS (N,N'-Dicyclohexyl-2-benzothiazolsulfenamid) oder MBS (N-Oxydiethylen-2-benzothiazolsulfenamid) auf sekundären Aminen. Es können ein oder mehrere Sulfinimidbeschleuniger in der Kautschukmasse enthalten sein.

Für ein besonders ausgewogenes Verhältnis von Anvulkanisationszeit $t_{10}$ und Ausvulkanisationszeit $t_{90}$ handelt es sich bei dem Sulfenimidbeschleuniger um N-tert.-Butyl-2-benzothiazolsulfenimid (TBSI, IUPAC-Bezeichnung: N,N-bis(1,3-Benzothiazol-2-ylsulfanyl)-2-methylpropan-2-amin). Die Verwendung des Sulfenimidbschleunigers N-tert.-Butyl-2-benzothiazolsulfenimid (TBSI) als Vulkanisationsbeschleuniger in cobalthaltigen Gummierungsmischungen ist beispielsweise aus der US 2010/0200141 A1 und der US 6,120,911 bekannt. Die Anvulkanisationszeit $t_{10}$ bezeichnet dabei die Zeit, bis etwa 10 % der Kautschukmasse vulkanisiert sind und entsprechend die Ausvulkanisationszeit $t_{90}$ diejenige Zeit, bis etwa 90 % der Kautschukmasse vulkanisiert sind.

Um die Haltbarkeit der Gummi-Metall-Haftung innerhalb des erfindungsgemäßen Elastomerprodukts im Hinblick auf oxidative Alterungsprozesse weiter zu verbessern, hat es sich als vorteilhaft erwiesen, wenn die Kautschukmasse 2 bis 10 phr Zinkoxid enthält.

Zur weiteren Haftungsverbesserung kann die Kautschukmasse Methylenakzeptor-Methylendonor-Paare in üblichen Mengen enthalten, insbesondere 5 bis 15 phr. Als Methylakzeptoren können dabei resorcinbasierte Methylenakzeptoren oder spezielle Novolak-Harze, wie Alnovol® PN 760/Past, der Firma Allnex Netherlands B. V., dienen. Als Methylendonor/Formaldehydspender können z. B. veretherte Melaminharze enthalten sein. Zu den veretherten Melaminharzen zählen beispielsweise Hexamethoxymethylmelamin (HMMM) und Hexamethylentetramin (HMT).

Zusätzlich kann die Kautschukmasse weitere nach der Vulkanisation wirkende Haftungsstabilisatoren, wie Natrium-Hexamethylen-1,6-bisthiosulfat-Dihydrat ($NaO_3SS(CH_2)_6SSO_3Na \cdot 2\,H_2O$), enthalten.

Die schwefelvernetzbare Kautschukmasse enthält weitere in der Kautschukindustrie übliche Bestandteile, insbesondere zumindest einen Natur- und/oder Synthesekautschuk.

Als Kautschuke können Dienkautschuke eingesetzt werden. Zu den Dienkautschuken zählen alle Kautschuke mit einer ungesättigten Kohlenstoffkette, die sich zumindest teilweise von konjugierten Dienen ableiten.

Die Kautschukmasse kann als Dienkautschuk Polyisopren (IR, NR) enthalten. Dabei kann es sich sowohl um cis-1,4-Polyisopren als auch um 3,4-Polyisopren handeln. Bevorzugt ist allerdings die Verwendung von cis-1,4-Polyisoprenen mit einem cis-1,4-Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren, der cis-1,4-Anteil im Naturkautschuk ist größer 99 Gew.-%. Unter Naturkautschuk wird Kautschuk verstanden, der durch Ernte von Quellen wie Kautschukbäumen (Hevea brasiliensis) oder nicht-Kautschukbaumquellen (wie z. B. Guayule oder Löwenzahn (z. B. Taraxacum koksaghyz)) gewonnen werden kann.

Enthält die Kautschukmasse als Dienkautschuk Polybutadien (BR), kann es sich um cis-1,4-Polybutadien handeln. Bevorzugt ist die Verwendung von cis-1,4-Polybutadien mit einem cis-1,4-Anteil größer 90 Gew.-%, welches z. B. durch Lösungspolymerisation in Anwesenheit von Katalysatoren vom Typ der seltenen Erden hergestellt werden kann.

Als weitere Dienkautschuke sind Vinyl-Polybutadiene und Styrol-Butadien-Copolymere einsetzbar. Bei den Vinyl-Polybutadienen und Styrol-Butadien-Copolymeren kann es sich um lösungspolymerisierte (Styrol)-Butadien-Copolymere (S-(S)BR) mit einem Styrolgehalt, bezogen auf das Polymer, von ca. 0 bis 45 Gew.-% und einem Vinylgehalt (Gehalt an 1,2-gebundenem Butadien, bezogen auf das gesamte Polymer) von 10 bis 90 Gew.-% handeln, welche zum Beispiel unter Verwendung von Lithiumalkylen in organischem Lösungsmittel hergestellt werden können. Die S-(S)BR können auch gekoppelt und endgruppenmodifiziert sein. Es können aber auch emulsionspolymerisierte Styrol-Butadien-Copolymere (E-SBR) sowie Mischungen aus E-SBR und S-(S)BR eingesetzt werden. Der Styrolgehalt des E-SBR beträgt ca. 15 bis 50 Gew.-% und es können die aus dem Stand der Technik bekannten Typen, die durch Copolymerisation von Styrol und 1,3-Butadien in wässriger Emulsion erhalten wurden, verwendet werden.

Die in der Kautschukmasse eingesetzten Dienkautschuke, insbesondere die Styrol-Butadien-Copolymere, können auch in teilweiser oder vollständig funktionalisierter Form eingesetzt werden. Die Funktionalisierung kann dabei mit Gruppen erfolgen, die mit den verwendeten Füllstoffen, insbesondere mit OH-Gruppen tragenden Füllstoffen, wechselwirken können. Es kann sich dabei z. B. um Funktionalisierungen mit Hydroxylgruppen und/oder Epoxygruppen und/oder Siloxangruppen und/oder Aminogruppen und/oder Phthalocyaningruppen und/oder Carboxygruppen und/oder Silansulfidgruppen handeln. Die Dienkautschuke können zusätzlich oder alternativ auch gekoppelt sein.

Zusätzlich zu den genannten Dienkautschuken kann die Kautschukmasse aber auch noch andere Kautschuktypen, wie z. B. Styrol-Isopren-Butadien-Terpolymer, Butylkautschuk, Halobutylkautschuk oder Ethylen-Propylen-Dien-Kautschuk (EPDM), enthalten.

Der Kautschukmasse kann als Verarbeitungshilfsmittel und zur Mischungsverbilligung auch Regenerat (Reclaim) zugesetzt werden.

Die Kautschukmasse kann unterschiedliche Füllstoffe, wie Ruße, Kieselsäuren, Alumosilicate, Kreide, Stärke, Magnesiumoxid, Titandioxid oder Kautschukgele in üblichen Mengen enthalten, wobei die Füllstoffe in Kombination eingesetzt werden können.

Wird Ruß in der Kautschukmasse eingesetzt, handelt es sich bevorzugt um solche Typen, die eine CTAB-Oberfläche (gemäß ASTM D 3765) von mehr als 30 m$^2$/g aufweisen. Diese lassen sich einfach einmischen und gewährleisten einen geringen Wärmeaufbau.

Sind Kieselsäuren in der Kautschukmasse enthalten, kann es sich um die für Reifenkautschukmischungen üblichen Kieselsäuren handeln. Besonders bevorzugt ist es, wenn eine fein verteilte, gefällte Kieselsäure verwendet wird, die eine CTAB-Oberfläche (gemäß ASTM D 3765) von 30 bis 350 m$^2$/g, vorzugsweise von 110 bis 250 m$^2$/g, aufweist. Als Kieselsäuren können sowohl konventionelle Kieselsäuren wie die des Typs VN3 (Handelsname) der Firma Evonik als auch hoch dispergierbare Kieselsäuren, so genannte HD-Kieselsäuren (z. B. Ultrasil 7000 der Firma Evonik), zum Einsatz kommen.

Enthält die Kautschukmasse Kieselsäure oder andere polare Füllstoffe, können der Kautschukmasse zur Verbesserung der Verarbeitbarkeit und zur Anbindung des polaren Füllstoffes an den Kautschuk Silan-Kupplungsagenzien zugesetzt werden. Die Silan-Kupplungsagenzien reagieren mit den oberflächlichen Silanolgruppen der Kieselsäure oder anderen polaren Gruppen während des Mischens des Kautschuks bzw. der Kautschukmasse (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln: -SCN, -SH, -NH$_2$ oder -S$_x$-(mit x = 2-8). So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid oder auch Gemische aus den Sulfiden mit 1 bis 8 Schwefelatomen mit unterschiedlichen Gehalten an den verschiedenen Sulfiden, verwendet werden. Die Silan-Kupplungsagenzien können dabei auch als Gemisch mit Industrieruß zugesetzt werden, wie z. B. TESPT auf Ruß (Handelsname X50S der Firma Evonik). Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT in verschiedenen Varianten von der Firma Momentive, USA, oder solche, die unter dem Namen VP Si 363 von der Firma Evonik Industries vertrieben werden. Einsetzbar sind auch sogenannte "silated core polysulfides" (SCP, Polysulfide mit silyliertem Kern), die z. B. in der US 20080161477 A1 und der EP 2 114 961 B1 beschrieben werden.

Des Weiteren kann die Kautschukmasse übliche Zusatzstoffe in üblichen Gewichtsteilen enthalten. Zu diesen Zusatzstoffen zählen Weichmacher, wie z. B. Glyceride, Faktisse, Kohlenwasserstoffharze, aromatische, naphthenische oder paraffinische Mineralölweichmacher (z. B. MES (mild extraction solvate) oder TDAE (treated distillate aromatic extract)), Öle auf Basis nachwachsender Rohstoffe (wie z. B. Rapsöl, Terpenöle (z. B. Orangenöle) oder Faktisse), so genannte BTL-Öle (wie sie in der DE 10 2008 037714 A1 offenbart sind) oder flüssige Polymere (wie z. B. flüssiges Polybutadien)); Alterungsschutzmittel, wie z. B. N-Phenyl-N'-(1,3-dimethylbutyl)-p-phenylendiamin (6PPD), N-Isopropyl-N'-phenyl-p-phenylendiamin (IPPD), 2,2,4-Trimethyl-1,2-dihydrochinolin (TMQ) und andere Substanzen, wie sie beispielsweise aus J. Schnetger, Lexikon der Kautschuktechnik, 2. Auflage, Hüthig Buch Verlag, Heidelberg, 1991, S. 42-48 bekannt sind, Aktivatoren, wie z. B. Fettsäuren (z. B. Stearinsäure), Wachse, Klebharze, wie z. B. Kohlenwasserstoffharze und Kolophonium, und Mastikationshilfsmittel, wie z. B. 2,2'-Dibenzamidodiphenyldisulfid (DBD).

Des Weiteren können die Korde des erfindungsgemäßen Elastomerprodukts auch eine Oberflächenbeschichtung aufweisen, um die Haftung zur Kautschukmasse weiter zu verbessern. In diesem Zusammenhang werden insbesondere kupferbasierte Legierungen wie Messing und Bronze bevorzugt. In einem solchen Fall weist nach einem weiteren Vorschlag der Erfindung die erfindungsgemäße Kautschukmasse zur weiteren Verbesserung der Haftung ferner auch Kobaltsalze enthaltend 0,03 bis 0,15 Masse-% Cobalt, vorzugsweise 0,03 bis 0,12 Masse-% Cobalt als Haftvermittler auf. Als Kobaltsalze können zum Beispiel Cobaltstearat, -borat, -borat-alkanoat, - naphthenat, - rhodinat, -octoat, -adipat usw. verwendet werden, wobei für die Hafteigenschaften die Verwendung von Cobaltstearaten und/oder Cobaltsboraten und/oder Cobaltnaphthenaten und/oder Cobaltborat-alkanoaten besonders vorteilhaft ist.

Die Herstellung der Kautschukmasse erfolgt auf herkömmliche Art und Weise, wobei zunächst in der Regel eine Grundmischung, die sämtliche Bestandteile mit Ausnahme des Vulkanisationssystems (Schwefel und vulkanisationsbeeinflussende Stoffe) enthält, in ein oder mehreren Mischstufen hergestellt wird und im Anschluss durch Zugabe des Vulkanisationssystems die Fertigmischung der vulkanisierbaren Kautschukmasse erzeugt wird. Anschließend wird die Kautschukmasse weiterverarbeitet, wobei auch die Korde eingebettet werden. Schließlich wird durch vollständige Vulkanisation der Kautschukmasse das erfindungsgemäße Elastomerprodukt final fertiggestellt.

Die Erfindung wird nachfolgend anhand von Ausführungsbeispielen weiter erläutert.

Es wurde ein für den Einsatz als Bauteil eines Fahrzeugluftreifens geeignetes Elastomerprodukt hergestellt, indem zunächst eine vulkanisierbare Kautschukmasse der nachfolgend in Tab. 1 wiedergegebenen Rezeptur unter üblichen Bedingungen in einem Labortangentialmischer angemischt wurde:

**Tabelle 1**

| Bestandteile | Einheit | Anteil |
|---|---|---|
| Naturkautschuk (Polyisopren) | phr | 100 |
| Ruß | phr | 63 |
| Weichmacher und Alterungsschutzmittel | phr | 9,6 |
| Cobaltstearat | phr | 1,3 |
| Methylenakzeptor-Methylendonor-Paar | phr | 7,2 |
| Beschleuniger DCBS | phr | 0,75 |
| Schwefel, verstr. mit 33 Gew.-% Öl | phr | 6,75 |

Ferner wurden 0,15mm dicke Filamente aus unlegiertem Kohlenstoffstahl miteinander helixförmig in einer Drehrichtung verdreht, um anschließend aus den solchermaßen verdrehten Strängen in gleicher Drehrichtung einen 3 x 2 x 0,15 Kord als Festigkeitsträger auszubilden. Die Filamente wurden dabei mit 208 t/m zu helixförmig verdrehten bzw. verdrillten Strängen und anschließend gemeinsam mit 158 t/m zu einem Kord verbunden.

Anschließend wurden die so gebildeten Korde in zwei Proben der vulkanisierbaren Kautschukmasse gemäß Tabelle 1 eingebettet, wobei auf die Enden der Korde eine Zug-Vorlast von 0,4 bzw. 5 kg aufgebracht wurde. Anschließend wurde die Kautschukmasse mit den eingebetteten Korden vollständig ausvulkanisiert und die Zugfestigkeit der Proben in Übereinstimmung mit dem Teststandard ASTM D2969 auf einer Zwick Z010 Testvorrichtung geprüft.

Dabei wurde ferner der reine Stahlkord in nicht in eine Kautschukmasse eingebetteter Form den beiden mit unterschiedlicher Vorlast ausgeführten Elastomerprodukten gegenübergestellt, um einen Vergleich zwischen den Dehnungseigenschaften vor der Vulkanisation und nach der Vulkanisation anstellen zu können. Die Zugfestigkeit wurde dabei jeweils unter anliegender Zugspannung von 50 N, 100 N und 150 N gemessen. Die Ergebnisse sind in Tab. 2 angegeben.

Tabelle 2

| Mechanische Eigenschaften des Kords | Variante | | |
|---|---|---|---|
| | 3x2x0.15 reiner Stahlkord | 3x2x0.15 vulkanisiert mit 0.4 Kg Vorlast | 3x2x0.15 vulkanisiert mit 5 Kg Vorlast |
| Dehnung bei 50 N (%) | 3.60 | 1.10 | 0.30 |
| Dehnung bei 100 N (%) | 4.00 | 1.80 | 0.60 |
| Dehnung bei 150 N (%) | 4.20 | 2.30 | 0.90 |

Es zeigte sich, dass das erfindungsgemäße Elastomerprodukt nach der vollständigen Vulkanisation bei der geringen Zugbelastung von 100 N eine deutliche Verringerung der Dehnung von weit über 10 % erfährt. Dies lässt die Elastomerprodukte insbesondere für Anwendungen im Reifenbau, beispielsweise für Karkassen, Gürtel und Spulbandagen von Hochleistungs-PKW-Luftreifen als besonders geeignet erscheinen.

Die erfindungsgemäßen Elastomerprodukte können darüber hinaus in unterschiedlichsten Gummiprodukten, in denen Korde vorhanden sind, eingesetzt werden. Bei diesen Gummiprodukten kann es sich neben Reifen insbesondere auch um (Endlos-) Antriebsriemen, Fördergurte, Schläuche, gummierte Gewebe oder Luftfedern handeln. Bei den Reifen kann es sich um z. B. PKW-, Van-, LKW-, Industrie-, Zweirad-, Landwirtschafts- oder Flugzeugreifen handeln.

**Patentansprüche**

**1.** Elastomerprodukt, welches wenigstens eine in eine vulkanisierbare Kautschukmasse eingebettete Festigkeitsträgerlage aufweist, wobei die Festigkeitsträgerlage von einer Vielzahl von Korden aus Stahl gebildet ist, die jeweils ausschließlich aus mindestens zwei helixförmig verdrehten Filamenten oder mindestens zwei aus mehreren helixförmig miteinander verdrehten Filamenten gebildeten Strängen bestehen, wobei zwischen benachbarten Filamenten freie Zwischenräume erhalten werden, die nach der Vulkanisation der Kautschukmasse von der Kautschukmasse aufgefüllt sind und die Korde eine Bruchdehnung von mindestens 5 % und eine Dehnung unter einer Zugbelastung von 100 N von mindestens 3,5 % aufweisen und die vulkanisierbare Kautschukmasse neben Natur- und/oder Synthesekautschuk Schwefel und/oder Schwefelspender sowie Beschleuniger enthält und die Dehnung der Korde nach der vollständigen Vulkanisation der Kautschukmasse unter Zugbelastung von 100 N um mindestens 10 % gegenüber dem Zustand vor der Vulkanisation verringert ist.

2.  Elastomerprodukt nach Anspruch 1, **dadurch gekennzeichnet, dass** die Korde eine Anzahl von n Filamenten mit einer jeweiligen Querschnittsfläche A, gemessen in $mm^2$ umfassen, wobei ein einzelner Kord aus einem Stahlwerkstoff mit dem E-Modul E gebildet ist und unter einer Zugbelastung von 0,5 N pro enthaltenem Filament in dem Kord eine helixförmig verlaufende Mittellinie und eine Steigungslänge $L_0$ aufweist und einen Wert P in N gemäß der Gleichung (1) von mindestens 50 N aufweist:

$$P = \pi n E \left(\frac{A}{S}\right)^2 \qquad (1),$$

wobei S die Länge der Mittellinie eines aus dem Kord vereinzelten Filaments über einen vollständigen Steigungsumlauf, gemessen in mm, ist.

3.  Elastomerprodukt nach Anspruch 2, **dadurch gekennzeichnet, dass** die Filamente einen äquivalenten Durchmesser d, definiert durch die Gleichung (2), aufweisen, wobei das Verhältnis S:d kleiner als 30 ist:

$$A = \frac{\pi d^2}{4} \qquad (2).$$

4.  Elastomerprodukt nach einem der Ansprüche 2 oder 3, **dadurch gekennzeichnet, dass** das Verhältnis $L_0$:S weniger als 0,95 beträgt.

5.  Elastomerprodukt nach einem der Ansprüche 1 bis 4, **dadurch gekennzeichnet, dass** die vulkanisierbare Kautschukmasse Schwefel und/oder Schwefelspender in einer Menge von 2 bis 8 phr, vorzugsweise von 4 bis 6 phr enthält.

6.  Elastomerprodukt nach einem der Ansprüche 1 bis 5, **dadurch gekennzeichnet, dass** die Kautschukmasse Beschleuniger in einer Menge von 0,5 bis 3 phr, vorzugsweise 0,8 bis 1,5 enthält.

7.  Elastomerprodukt nach einem der Ansprüche 1 bis 6, **dadurch gekennzeichnet, dass** der Beschleuniger auf Basis von Sulfenimid oder Sulfenamid ausgebildet ist, insbesondere aus der N-Cyclohexyl-2-benzothiazolsulfenamid (CBS), N,N-Dicyclohexylenbenzothiazol-2-sulfenamid (DCBS), Benzothiazyl-2-sulfenmorpholid (MBS) undN-tert.Butyl-2-benzothiazylsulfenamid (TBBS) umfassenden Gruppe ausgewählt ist.

8.  Elastomerprodukt nach einem der Ansprüche 1 bis 7, **dadurch gekennzeichnet, dass** die Korde eine Oberflächenbeschichtung auf Basis von Messing aufweisen und die Kautschukmasse ferner Kobaltsalze enthaltend 0,03 bis 0,15 Masse-% Kobalt aufweist.

9.  Elastomerprodukt nach Anspruch 8, **dadurch gekennzeichnet, dass** die Kobaltsalze aus der Cobaltstearat, -borat, -borat-alkanoat, - naphthenat, -rhodinat, -octoat, -adipat umfassenden Gruppe ausgewählt sind.

10. Elastomerprodukt nach einem der Ansprüche 1 bis 9, **dadurch gekennzeichnet, dass** die Kautschukmischung ferner Methylenakzeptor-Methylendonor-Paare in einer gemeinsamen Menge von 5 bis 15 phr enthält.

11. Fahrzeugluftreifen, enthaltend ein Elastomerprodukt gemäß einem der vorangehenden Ansprüche.

12. Endlosriemen, Gummiraupe oder Förderband, gebildet aus einem Elastomerprodukt gemäß einem der vorangehenden Ansprüche.

**Claims**

1. Elastomer product having at least one strength member ply embedded into a vulcanizable rubber compound, where the strength member ply is formed from a multitude of steel cords that each consist exclusively of at least two helically twisted filaments or at least two strands formed from two or more mutually helically twisted filaments to obtain clear interspaces between adjacent filaments, which are filled by the rubber compound after the rubber compound has been vulcanized, and the cords have an elongation at break of at least 5% and an elongation under a tensile stress of 100 N of at least 3.5%, and the vulcanizable rubber compound, as well as natural rubber and/or synthetic rubber, contains sulfur and/or sulfur donors and accelerators, and the elongation of the cords after complete vulcanization of the rubber compound under a tensile stress of 100 N is reduced by at least 10% compared to the state prior to the vulcanization.

2. Elastomer product according to Claim 1, **characterized in that** the cords comprise a number of n filaments having a respective cross-sectional area A, measured in mm$^2$, where a single cord is formed from a steel material with modulus of elasticity E and, under a tensile stress of 0.5 N per filament present in the cord, has a centre line that runs helically and a pitch $L_0$, and a value P in N according to equation (1) of at least 50 N:

$$P = \pi n E \left(\frac{A}{S}\right)^2 (1),$$

where S is the length of the centre line of a filament isolated from the cord over the course of one complete pitch, measured in mm.

3. Elastomer product according to Claim 2, **characterized in that** the filaments have an equivalent diameter d, defined by equation (2), where the ratio S:d is less than 30:

$$A = \frac{\pi d^2}{4} \qquad (2).$$

4. Elastomer product according to either of Claims 2 and 3, **characterized in that** the ratio $L_0$:S is less than 0.95.

5. Elastomer product according to any of Claims 1 to 4, **characterized in that** the vulcanizable rubber compound contains sulfur and/or sulfur donor in an amount of 2 to 8 phr, preferably of 4 to 6 phr.

6. Elastomer product according to any of Claims 1 to 5, **characterized in that** the rubber compound contains accelerators in an amount of 0.5 to 3 phr, preferably of 0.8 to 1.5.

7. Elastomer product according to any of Claims 1 to 6, **characterized in that** the accelerator is based on sulfenimide or sulfenamide, and is especially selected from the group encompassing N-cyclohexyl-2-benzothiazolesulfenamide (CBS), N,N-dicyclohexylenbenzothiazole-2-sulfenamide (DCBS), benzothiazyl-2-sulfenmorpholide (MBS) and N-tert-butyl-2-benzothiazylsulfenamide (TBBS)

8. Elastomer product according to any of Claims 1 to 7, **characterized in that** the cords have a surface coating based on brass and the rubber compound also includes cobalt salts containing 0.03% to 0.15% by mass of cobalt.

9. Elastomer product according to Claim 8, **characterized in that** the cobalt salts are selected from the group encompassing cobalt stearate, cobalt borate, cobalt borate alkanoate, cobalt naphthenate, cobalt thiocyanate, cobalt octoate and cobalt adipate.

10. Elastomer product according to any of Claims 1 to 9, **characterized in that** the rubber mixture also contains methylene acceptor-methylene donor pairs in a collective amount of 5 to 15 phr.

11. Pneumatic vehicle tyre containing an elastomer product according to any of the preceding claims.

12. Continuous belt, rubber caterpillar track or conveyor belt, formed from an elastomer product according to any of the preceding claims.

**Revendications**

1. Produit élastomère, qui comporte au moins une couche de renfort intégrée dans une masse de caoutchouc vulcanisable, la couche de renfort étant formée d'une pluralité de cordes en acier, qui sont constituées chacune exclusivement d'au moins deux filaments torsadés hélicoïdalement ou d'au moins deux brins formés à partir de plusieurs filaments torsadés hélicoïdalement, des interstices libres étant obtenus entre des filaments adjacents, qui sont remplis de la masse de caoutchouc après la vulcanisation de la masse de caoutchouc et les cordes présentant un allongement à la rupture d'au moins 5 % et un allongement sous une charge de traction de 100 N d'au moins 3,5 %, et la masse de caoutchouc vulcanisable contenant, en plus du caoutchouc naturel et/ou synthétique, du soufre et/ou des donneurs de souffre ainsi que des accélérateurs et l'allongement des cordes étant réduite, après la vulcanisation complète de la masse de caoutchouc, sous une charge de traction de 100 N, d'au moins 10 % par rapport à l'état avant la vulcanisation.

2. Produit élastomère selon la revendication 1, **caractérisé en ce que** les cordes comprennent un certain nombre de n filaments avec une surface de section transversale respective A, mesurée en $mm^2$, une corde unique étant formée à partir d'un matériau en acier avec le module d'élasticité E et comportant une ligne médiane s'étendant hélicoïdalement et une longueur de pas $L_0$ sous une charge de traction de 0,5 N par filament contenu dans la corde et présente une valeur P dans N selon l'équation (1) d'au moins 50 N :

$$P = \pi n E \left(\frac{A}{S}\right)^2 (1),$$

S étant la longueur de la ligne médiane d'un filament séparé de la corde sur une périphérie de pas totale, mesurée en mm.

3. Produit élastomère selon la revendication 2, **caractérisé en ce que** les filaments présentent un diamètre équivalent d défini par l'équation (2), le rapport S:d étant inférieur à 30 :

$$A = \frac{\pi d^2}{4} \qquad (2).$$

4. Produit élastomère selon l'une des revendications 2 ou 3, **caractérisé en ce que** le rapport $L_0$:S est inférieur à 0,95.

5. Produit élastomère selon l'une des revendications 1 à 4, **caractérisé en ce que** la masse de caoutchouc vulcanisable contient du soufre et/ou des donneurs de soufre en une quantité de 2 à 8 phr, de préférence de 4 à 6 phr.

6. Produit élastomère selon l'une des revendications 1 à 5, **caractérisé en ce que** la masse de caoutchouc comprend des accélérateurs en une quantité de 0,5 à 3 phr, de préférence de 0,8 à 1,5.

7. Produit élastomère selon l'une des revendications 1 à 6, **caractérisé en ce que** l'accélérateur est formé à base de sulfénimide ou de sulfénamide, en particulier à partir du groupe comprenant le N-cyclohexyl-2-benzothiazole sulfénamide (CBS), le N,N-dicyclohexylènebenzothiazole-2-sulfénamide (DCBS), le benzothiazyl-2-sulfénmorpholide (MBS) et le N-tert-butyl-2-benzothiazylsulfénamide (TBBS).

8. Produit élastomère selon l'une des revendications 1 à 7, **caractérisé en ce que** les cordes comportent un revêtement de surface à base de laiton et la masse de caoutchouc comporte en outre des sels de cobalt contenant 0,03 à 0,15 % en poids de cobalt.

9. Produit élastomère selon la revendication 8, **caractérisé en ce que** les sels de cobalt sont choisis dans le groupe comprenant du stéarate de cobalt, du borate de cobalt, de l'alcanoate de borate de cobalt, du naphténate de cobalt, du rhodinate de cobalt, de l'octoate de cobalt, de l'adipate de cobalt.

10. Produit élastomère selon l'une des revendications 1 à 9, **caractérisé en ce que** le mélange de caoutchouc contient en outre des paires accepteur de méthylène-donneur de méthylène en une quantité commune de 5 à 15 phr.

11. Pneumatique de véhicule, contenant un produit élastomère selon l'une des revendications précédentes.

12. Courroie sans fin, chenille en caoutchouc ou bande transporteuse formée à partir d'un produit élastomère selon l'une des revendications précédentes.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9516816 A1
- US 20100200141 A1
- US 6120911 A
- WO 9909036 A
- WO 2008083241 A1
- WO 2008083242 A1
- WO 2008083243 A1
- WO 2008083244 A1
- US 20080161477 A1
- EP 2114961 B1
- DE 102008037714 A1

**In der Beschreibung aufgeführte Nicht-Patentliteratur**

- **J. SCHNETGER**. Lexikon der Kautschuktechnik. Hüthig Buch Verlag, 1991, 42-48